# EUROPEAN PATENT APPLICATION

(11) **EP 4 756 560 A1**
(43) Date of publication of application: **10.06.2026**
(21) Application number: 24218184.0
(22) Date of filing: 06.12.2024
(51) Int. Cl.: G05D 1/678, G05D 1/692, G05D 1/698

(54) **DEVICE AND METHOD FOR CONTROLLING NAVIGATION OF AN ASSEMBLY INCLUDING AN UNCREWED MARINE VEHICLE**

(71) Applicant: FNV IP B.V., 2264 SG Leidschendam (NL)
(72) Inventor: Lafontaine, Stijn Cornée, 2264 SG Leidschendam (NL); Hendrix, Julius Louis Anselmus Maria, 2264 SG Leidschendam (NL); Laporte, Jonathan René Janick, 2264 SG Leidschendam (NL); Dias Bispo Carvalho, Diego, 2264 SG Leidschendam (NL); Brekelmans, Christiaan Theodorus Wijnand, 2264 SG Leidschendam (NL)
(74) Representative: FNV Intellectual Property

(57) **Abstract**

The present invention relates to methods and devices for controlling navigation of an uncrewed surface vessel (USV) and a remotely operated vehicle (ROV) deployed underwater connected to the USV via an umbilical. The method comprises navigating the ROV underwater, navigating the USV, acquiring a current navigation risk level, upon determining the current navigation risk level being above a predetermined risk value, instructing the USV-ROV assembly to switch to a follow-sub mode in which the ROV is autonomously following the USV. Unlocking insights from Geo-Data, the present invention further relates to improvements in sustainability and environmental developments: together we create a safe and liveable world.

## Description

### FIELD OF THE INVENTION

The present disclosure generally relates to the field of uncrewed marine vehicles (UMVs), specifically assemblies including at least one UMV. Unlocking insights from Geo-Data, the present invention further relates to improvements in sustainability and environmental developments: together we create a safe and liveable world.

### BACKGROUND OF THE INVENTION

Examples of UMVs are uncrewed or unmanned surface vessels (USVs) and remotely operated vehicles (ROVs). These vehicles are used for various maritime applications, including subsea geo-data surveying, environment monitoring, maritime facility and subsea infrastructure maintenance. The USV and ROV can operate as an assembly.

USVs operate on the surface of a body of water, while ROVs may more typically be deployed for either water-surface or underwater operations, most typically underwater operations. UMVs and ROVs are configured to be operable without any human crew onboard. They may be remotely operated or controlled from a remote base station on land (e.g., a remote operating centre), at sea or in the air; configured to operate autonomously, for example to autonomously navigate at sea on the surface and/or sub-sea; or operate under a combination of autonomous control and remote control. When operating autonomously, the UMVs may advantageously operate independently or with minimal (remote) human intervention.

One of the advantages of UMVs is their ability to operate in harsh and hazardous environments where a human presence is not ideal or not possible. This capability is particularly valuable for tasks such as deep-sea survey, environmental monitoring and underwater infrastructure inspection in extreme conditions. The UMV, specifically the ROV, can operate in an appointed working area.

Furthermore, remote operations in marine environments are particularly advantageous because it reduces exposure of human staff to hazardous maritime surroundings. In addition, without staff on board, the size and weight of the vessel can be dramatically reduced, which leads to much more efficient operations, with reduced emissions. Remote operations thus increase safety and reduce environmental impact.

Enhancing the autonomy of UMVs may be desirable for several reasons. When human intervention is minimized, the autonomy can lead to increased productivity, reduced operational costs, and/or extended operation periods. In addition, improved autonomous decision-making also increases safety in the event of, for example, latency issues with control or signal loss. Therefore, it is desirable to improve the ability of UMVs to operate autonomously. This may further reduce needs for base station intervention as remote control, and needs for base stations to remain in constant contact with UMVs, for example reducing needs for deployment and/or presence of mother vessels or aircraft for remote control, instruction or monitoring of UMVs.

Advanced autonomy is desired for the UMVs. However, for safety reasons, an option for human intervention to take-over the control of the UMVs is usually implemented for safety reasons. Any of the embodiments disclosed herein can relate to UMVs that operate fully autonomous, that are human/remotely operated or a combination of any of the modes.

During operation, a deployed ROV remains in communication, and optionally also power contact, with a mother vessel. The mother vessel may be any vessel having the ability to remotely operate the ROV. The mother vessel may be a manned or uncrewed surface vessel.

ROVs are typically deployed for subsurface operations, such that wired communication and power transfer is most securely and reliably achieved by a physical connection. The connection may conventionally be provided by an umbilical connecting the surface vessel to the ROV. An umbilical may be seen as a cable that connects the ROV to the surface control system comprised by the surface vessel. It contains wired connections to provide, for example, power, control signals, and data transfer between the ROV and the surface. Umbilical cables are typically designed to withstand harsh underwater environments and can include components like electrical conductors, fibre-optic cables, and strength members to ensure durability and reliability. In any of the embodiments disclosed here, a ROV carrying out operations underwater can be connected to a surface vessel, e.g. a USV, using an umbilical.

When a vessel, such as a manned or uncrewed surface vessel, has an ROV deployed underwater, both the vessel and the ROV are restricted in manoeuvrability due to the umbilical physically joining them. If the vessel and/or ROV attempt to move relative to one another, tension in the umbilical may increase, potentially leading to damage or loss of functionality. This restricts the vessel's and the ROV's freedom to manoeuvre. However, such manoeuvres may be desired for purposes of navigation, such as to avoid collisions, to follow navigational rules, to give way to stand-on vessels, to give way to other surface vessels, and/or to adapt to changing environmental conditions.

One factor contributing to increased tension in the umbilical is drag from the water. As the vessel moves, the umbilical experiences drag forces from the water, which can significantly increase the tension in the umbilical. This drag is influenced by factors such as the speed of the vessel relative to the water, the length/weight/volume of the umbilical, and the hydrodynamic properties of the umbilical. High drag forces can lead to excessive tension, risking damage to the umbilical and compromising the operation of both the vessel and the ROV.

Another factor contributing to increased tension in the umbilical is the ROV that is deployed and operating in a working area. As the vessel moves, the umbilical tends to pull the ROV connected to one end of the umbilical. This connection to the ROV also contributes to the increase of the tension.

There is a desire for methods and systems that control and/or mitigate tension in the umbilical when the vessel and/or ROV move. The manoeuvrability of the vessel may then be improved, allowing freer navigation and effectively addressing of its surroundings. Such methods and systems could preferably enable a vessel with deployed ROV to avoid collisions, follow navigational rules, and adapt to changing environmental conditions without compromising the functionality of the umbilical or the operation or operating position of the ROV. The present invention relates to providing improvements in relation to enhancing the autonomy, safety, and efficiency of surface vessels and ROV operations in maritime environments.

### BRIEF SUMMARY OF THE INVENTION

In the first aspect, the invention provides a method for controlling the navigation of an assembly of a vessel, such as an uncrewed vessel (USV), and a remotely operated vehicle (ROV) deployed underwater, the ROV being connected to the vessel via an umbilical. The method comprises the steps of navigating the ROV underwater. The ROV can operate in a working area.

In embodiments, the vessel, such as the USV, will navigate. Navigation of the vessel / USV can be autonomous, semi-autonomous or human controlled. During navigation, the vessel will be propelled, and a direction is set. Navigation and propulsion can be set so that the vessel moves according to a navigation trajectory. The navigation trajectory can be set by human or can be generated/calculated by a control unit that generates the navigation trajectory based on information about the surroundings or based on navigational rules.

In embodiments of the invention, the method comprises acquiring a navigation risk level and providing a predetermined risk value. The navigation risk level can be a current level, based on live observations of e.g. surroundings. Navigation risk level can also relate to predictions and/or expectations and/or future conditions of surroundings. The navigation risk level can relate to the vessel and/or USV and/or ROV and/or umbilical in any combination. The navigation risk level can relate to relative positions of objects surrounding the vessel and/or ROV and/or umbilical. The navigation risk level accounts e.g. for a risk of a collision between any part of the assembly vessel and ROV with an object.

In embodiments, the predetermined risk value is a set value, e.g. based on historical findings in relation to the navigation risk level. The predetermined risk value can be set at a value above which the navigation risk level is found to indicate a likely risk for any of vessels/USV/ROV/umbilical.

In embodiments of the invention, the method comprises upon determining that the navigation risk level is above the predetermined risk value, instructing the USV-ROV assembly to switch to a follow-USV mode in which the ROV is configured to autonomously follow the USV. By triggering the ROV to follow the surface vessel or USV, the relative motions between the surface vessel/USV and the ROV can be minimized. These minimized relative motions allow the USV to move at the sea surface, while the ROV can leave the inspection area preventing an increase in the tension in the umbilical connecting the USV and the ROV. The additional degree of freedom to manoeuvre at the sea surface allows the USV to navigate more freely in view of risks associated with the surrounding environment, for example, in order to avoid collision with an object and the USV can operate to follow the navigational rules such as Convention on the International Regulations for Preventing Collisions at Sea (COLREGs).

In embodiments, the method may further comprise steps of generating a navigation trajectory for the USV in view of the navigation risk level. The navigation trajectory can be generated with a goal to reduce the navigation risk level of the USV at the location to which it is navigating. This reduces the risk of collisions and other hazards.

In embodiments, the method may further comprise a step of deactivating the follow-USV mode upon determining that the navigation risk level is below the predetermined risk value. This allows the USV-ROV assembly to resume normal operations when the risk level decreases, ensuring flexibility and adaptability in navigation.

In embodiments, the step of acquiring of the navigation risk level may further comprise acquiring a set of sensor data indicative of surface conditions surrounding the USV and determining the navigation risk level of the USV in view of the acquired set of sensor data. This enables the vessel or USV to autonomously make decisions based on real-time environmental data collected from sensors. The sensors can be mounted on the vessel / USV.

In embodiments, the method may further comprise the steps of: (i) periodically updating the set of sensor data and (ii) periodically updating the navigation risk level based on the updated set. This ensures that the navigation strategy is based on the most up-to-date information, enhancing the safety and efficiency of the USV-ROV assembly.

In embodiments, the step of acquiring of the sensor data may further comprise acquiring from at least one of or any combination of a radar sensor, a lidar sensor, a sonar sensor, an optical sensor, and a weather sensor. These sensors provide comprehensive data about the surrounding environment, enabling accurate risk assessments. The vessel or USV can include image recognition capabilities and/or object position and distance determining units. The combination of sensors, capabilities and units allows reducing the observed surroundings into a navigation risk level with a value that relates and increases with the risk of a collision with an object.

In embodiments, the acquiring of the sensor data comprises acquiring the set of sensor data indicative of any of or any combination of wave height, wind speed, wind direction, water currents, visibility, temperature, and nearby objects. The sensor data of the nearby objects can include properties derived from image processing technique, wherein the properties can include the size, shape, temperature, movement, and other properties of the objects. This detailed environmental data takes into account the different properties of the surroundings and allows for precise risk assessments and optimized navigation strategies.

In embodiments, the generating of the navigation trajectory for the USV may be carried out further in view of the current position of the ROV. This ensures that the navigation strategy takes into account not only the safety measures for addressing the risk factors, but also takes into account the position and status of the ROV. This is useful for maintaining the functionality of the umbilical when the USV is navigating.

In embodiments, the method may further comprise a step of sending an alert to a land-based station or a human operator upon determining that the navigation risk level is above the predetermined risk value. The alert can be sent together with a navigation trajectory the USV generated so that the land-based station or the human operator can assess whether the USV is taking a proper action in view of the risk factors of the situation. This ensures that human operators are informed of critical situations and can intervene if necessary.

The method may further comprise receiving a second navigation trajectory from a land-based station or a human operator and prioritizing the second navigation trajectory over the navigation trajectory. This allows for human intervention and control in critical situations.

In embodiments, the method may further comprise steps of (i) receiving a second risk value via a wireless communication channel, and (ii) updating the predetermined risk value based on the received second risk value. This allows for dynamic adjustment of the risk threshold based on external inputs, enhancing the flexibility and adaptability of the navigation strategy.

In embodiments, the method may further comprise upon determining that the navigation risk level is above a second predetermined risk value which is higher than the predetermined risk value, generating a third navigation trajectory for the USV to reduce the navigation risk level. This ensures that the USV-ROV assembly can respond to high-risk situations with appropriate navigation strategies in an adaptive manner.

In embodiments, the acquiring of the navigation risk level may further be based on a measured tension in an umbilical connecting the USV and the ROV. This ensures that the navigation strategy takes into account the physical condition of the umbilical, enhancing the safety and reliability of the USV-ROV assembly.

In the second aspect, the invention provides an assembly of an uncrewed surface vessel (USV), which can be navigated autonomously or via remote control, and a remotely operated vehicle (ROV) connected to the USV via an umbilical. The ROV has at least one ROV drive. The USV has at least one USV drive. The USV has at least one sensor configured to acquire a set of sensor data. The sensor data preferably are indicative of surface conditions surrounding the USV. In embodiments, the USV has a risk management unit configured to determine a navigation risk level based on the set of sensor data. The navigational risk level can take into account the surroundings and navigational rules and is a level that is preferably associated with the risk of a future collision of the surface vessel, USV or ROV.

In embodiments of the second aspect, the assembly has at least one control unit configured to operate the ROV drive to navigate and propel the ROV underwater. The control unit can operate the ROV to navigate in at least a follow-the-USV mode. In the follow-the-surface-vessel mode or the follow-the-USV mode, the ROV will propel itself in a direction corresponding with the navigation trajectory of the surface vessel/USV. The ROV will be able to leave the area it was inspecting. The control unit is also configured to operate the USV drive to navigate the USV in the sea. The control unit can be configured to operate the USV drive in a follow-the-ROV mode. In the follow-the-ROV mode, the surface vessel or USV will be propelled to move/navigate in accordance with the navigation trajectory of the ROV.

In embodiments, upon determining that the navigation risk level is above a predetermined risk value, the control unit is arranged to switch on the follow-the-USV mode. This assembly enhances the safety and efficiency of the USV-ROV operations by dynamically coordinating the relative position between the USV and the ROV by establishing the navigation strategy based on real-time risk assessments.

In embodiments, upon determining that the navigation risk level is above the predetermined risk value, the control unit is configured to switch from the follow-the-ROV mode to a mode in which a USV navigation trajectory, e.g. generated on the basis of the surroundings, is executed. The USV navigation trajectory can be generated using the navigation risk level, in particular to navigate the USV to a location of lower navigation risk level. This ensures that the USV-ROV assembly autonomously act to reduce the navigation risk level. The control unit will set a safe, and preferably optimized, path, reducing the risk of collisions and other hazards.

The assembly of the second aspect can be configured to carry out any or all of the method steps of the first aspect and its embodiments.

In embodiments, the control unit can be further configured to switch on the follow-the-ROV mode (for the USV to follow the ROV) and switch off the follow-the-USV mode (for the ROV to follow the USV) upon determining that the navigation risk level is no longer above the predetermined risk value. This allows the USV-ROV assembly to resume normal operations when the risk level decreases, ensuring flexibility and adaptability in navigation.

In embodiments, the at least one sensor can be further configured to periodically acquire sensor data and update the set of sensor data, and the risk management unit is further configured to periodically update the risk factor based on the updated set of sensor data. This ensures that the navigation strategy is based on the most up-to-date information, enhancing the safety and efficiency of the USV-ROV assembly. In an advantageous implementation, the set of sensor data is updated at intervals of between about 0,01 Hz and 50 Hz, advantageously of between about 0,1 Hz and 20 Hz, more advantageously between about 1 Hz and 5 Hz. In an implementation, the sensor is an x-band radar, advantageously having a measurement cycle of between about 20 to 100 RPM, more advantageously of between about 30 to 80 RPM, still more advantageously of between about 40 to 60 RPM. In an implementation, the sensor is an optical camera, advantageously having a measurement cycle of between about 1 and 60 frames per second, more advantageously of between about 2 and 50 frames per second, still more advantageously of between about 5 and 30 frames per second. In an implementation the sensor is a LiDAR sensor, advantageously having a measurement cycle of between about 1 to 60 frames per second, more advantageously of between about 5 to 40 frames per second, still more advantageously of between about 10 to 20 frames per second. In an implementation the risk management unit is configured to periodically update the risk factor based on the updated set of sensor data at a rate of between about 0,01 Hz and 50 Hz, advantageously of between about 0,1 Hz and 20 Hz, more advantageously between about 1 Hz and 5 Hz. In a particularly advantageous implementation, the risk management unit is configured to periodically update the risk factor based on the updated set of sensor data at a rate of 3 Hz.

In the third aspect, the invention provides a surface vessel to be connected to a remotely operated vehicle (ROV) via an umbilical. The surface vessel comprises at least one surface vessel drive and at least one sensor configured to acquire a set of sensor data that preferably are indicative of surface conditions surrounding the surface vessel. The surface vessel preferably has a risk management unit arranged to determine a risk factor based on the set of sensor data. The surface vessel preferably has at least one control unit configured to operate the surface vessel drive to navigate the surface vessel in the sea. The control unit is configured to navigate the surface vessel at least in a follow-the-ROV mode. In the follow-the-ROV mode, the surface vessel navigates dependent on the navigation trajectory of the ROV.

In embodiments, the control unit of the surface vessel is configured to, upon determining that the navigation risk level is above a predetermined risk value, switch off the follow-the-ROV mode. This surface vessel is suitable for use in ROV operations such that the surface vessel can swiftly adjust its position or navigation trajectory to address any risks at the sea surface.

In embodiments, the control unit of the surface vessel is configured to communicate via the umbilical with the ROV. The control unit can be configured to instruct the ROV to switch to a follow-the-surface-vessel mode upon determining that the navigation risk level is above the predetermined risk value. This prevents tension on the umbilical. Upon determining that the navigation risk level is becoming too high, e.g. indicating a future collision with an object in the surroundings, the surface vessel takes over the control of the navigation trajectory of the ROV and instructs the ROV to follow the navigation trajectory of the surface vessel.

In embodiments, the surface vessel is an uncrewed surface vessel. This allows for autonomous operations, reducing the need for human intervention and enhancing the efficiency and safety of maritime operations.

In embodiments, the control unit of the surface vessel is configured to calculate a navigation trajectory for the surface vessel that results in a lowering of the navigation risk level. By navigating to a different location, a collision risk can be avoided.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are therefore not to be considered to be limiting of its scope, the principles herein are described and explained with additional specificity and detail through the use of the accompanying drawings in which:
FIG. 1 is a schematic view of a surface vessel connected to a remotely operated vehicle (ROV) deployed underwater.
FIG. 2 is a flow chart of a method for controlling navigation of an assembly of an uncrewed surface vessel (USV) and a remotely operated vehicle (ROV) deployed underwater connected to the USV via an umbilical.
FIG. 3A is a schematic view of a USV-ROV assembly in a follow-ROV mode, in which a surface vessel is following the navigation direction of the ROV while maintaining the functionality of the umbilical and preventing high tension in the umbilical.
FIG. 3B is a schematic view of a USV-ROV assembly in a follow-ROV mode. An object (in this example, another vessel) is on the way of the USV-ROV assembly.
FIG. 3C is a schematic view of the USV-ROV assembly of FIG. 3B after switching from the follow-ROV mode to a follow-USV mode to navigate away from the detected object for safe navigation.

### DESCRIPTION OF ILLUSTRATIVE EMBODIMENTS

The following is a description of certain embodiments of the invention, given by way of example only and with reference to the drawings. The drawings are not necessarily to the actual scale and only serve the purpose of illustrating necessary teachings for implementing the present invention.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. A reference to an embodiment in the present disclosure can be a reference to the same embodiment or any other embodiment. Such references thus relate to at least one of the embodiments herein.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

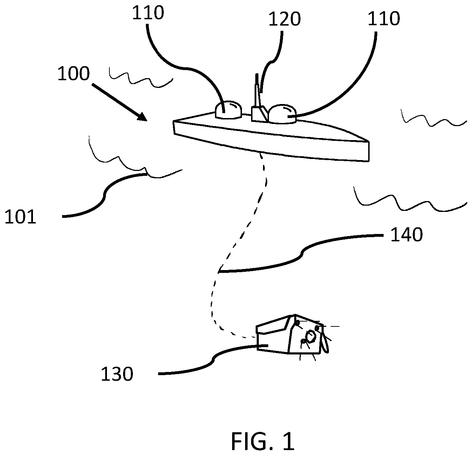

FIG. 1 illustrates a surface vessel 100 at sea surface 101 having sensor(s) 110 for sensing the surroundings, and a communication means 120 for transmitting and receiving data when needed. The sensor(s) 110 can be used to sense nearby objects, e.g., other vessels, buoys, floating debris, marine life, sea marks, or any other objects influencing the navigational environment. The sensor(s) 110 can also be used to detect weather conditions, water conditions, and any other environmental conditions which can influence the navigational environment.

When the surface vessel 100 is a USV, the USV can operate autonomously or remotely controlled by a human operator. The surface vessel, USV and ROV will have a drive to allow them to navigate. The drive allows controlling direction and speed. The drive allows propelling the vessel/USV/ROV in a desired direction, e.g. along a navigation trajectory.

As shown in FIG. 1, ROV 130 can be deployed underwater while being connected to the surface vessel 100 via an umbilical 140. The surface vessel 100 can acquire the position of the ROV 130 either by receiving the ROV position information from the ROV 130 (for example via a communication channel in an umbilical 140, or via underwater wireless communication techniques), or detect the ROV position using appropriate sensor(s) such as a sonar sensor. Any other sensor known in the art suitable for detecting a ROV position from a surface vessel can be used. The ROV 130 can also acquire the position of the surface vessel 100 similarly, either by receiving the surface vessel position information directly from the surface vessel 100, or by detecting the surface vessel location using a sensor.

Depending on the underwater ROV operation, the surface vessel 100 can maintain a relative position to the ROV 130 by dynamic positioning so that the umbilical 140 is not pulled to increase tension. The surface vessel can operate in a follow-the-ROV mode. If the ROV 130 is navigating underwater for carrying out necessary underwater tasks, the surface vessel 100 can actively follow the ROV 130 such that the umbilical 140 is not pulled and thus fully functional. In the follow-ROV mode, the surface vessel follows the ROV while prioritizing the working position of the ROV and safe operation of the umbilical 140.

If the ROV 130 is maintaining its position at a static location underwater, the surface vessel 100 can also remain at a static relative location with respect to the ROV 130.

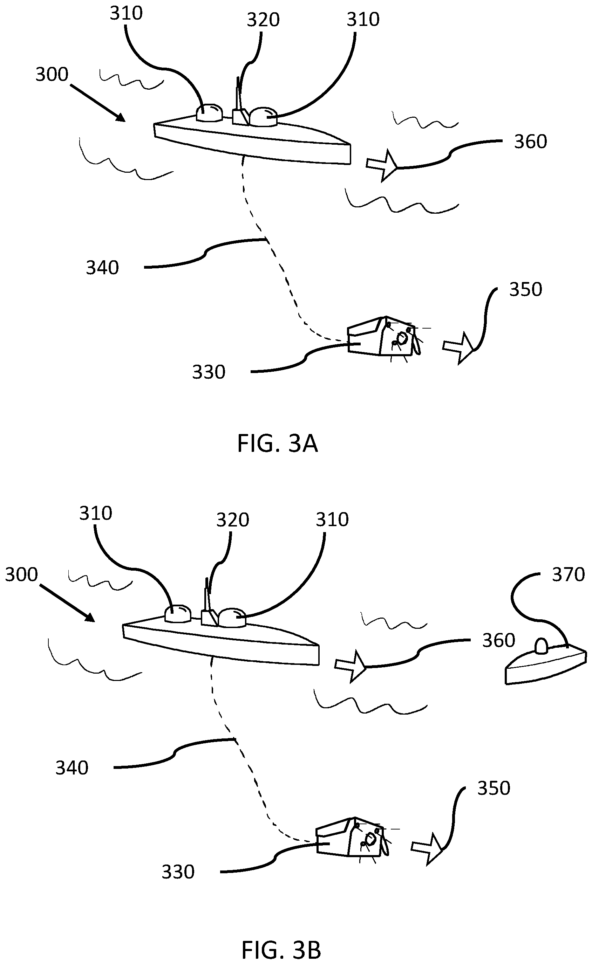

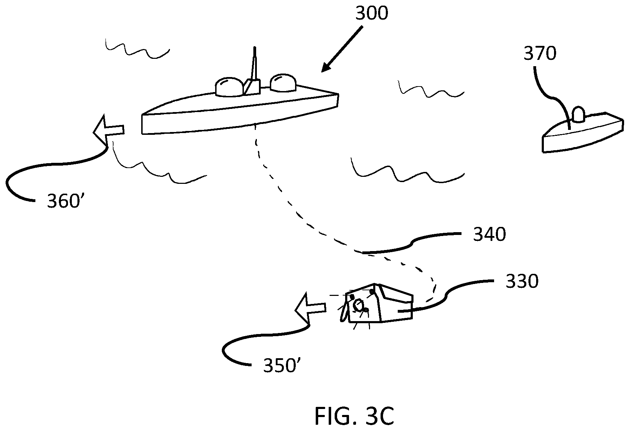

Since the surface vessel 100 and the ROV 130 can be configured to sense each other's position, the assembly of the surface vessel 100 and the ROV 130 can operate in a coordinated manner in the follow-ROV mode (shown for example in FIG. 3A) or in a follow-surface-vessel mode (shown for example in FIG. 3C).

On the other hand, in the follow-USV mode, the ROV 130 can actively follow the surface vessel 100 such that the surface vessel 100 can manoeuvre at the sea surface as long as the ROV 130 can follow it to maintain the functionality of the umbilical 140. Typically, the ROV 130 cannot manoeuvre fast underwater due to small thrusters compared to surface vessels 100. Therefore, when manoeuvring, the surface vessel 100 would take into account the capability of the ROV 130 and manoeuvre at a proper speed which the ROV 130 can follow.

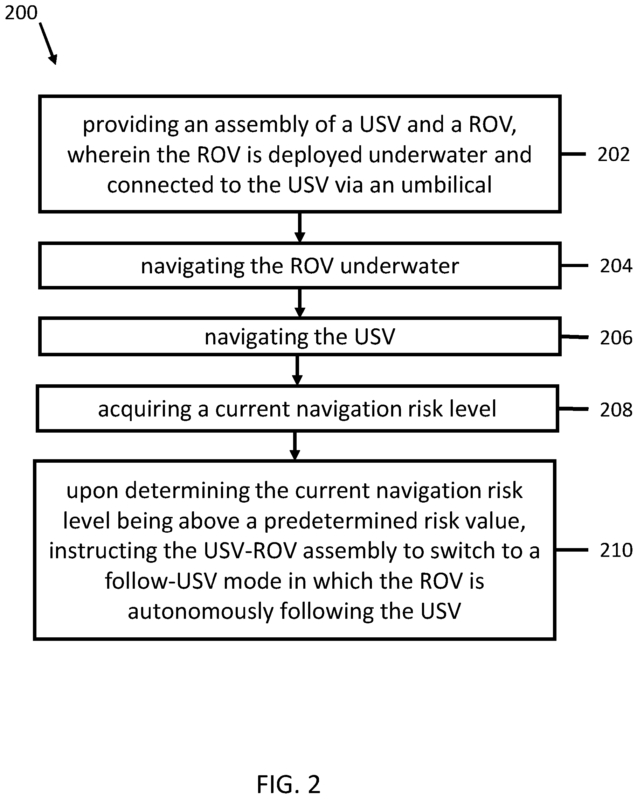

FIG. 2 illustrates a flow chart of a method 200 for controlling navigation of an assembly of a USV and a ROV deployed underwater connected to the USV via an umbilical. Step 202 relates to providing an assembly of a USV and a ROV, wherein the ROV is deployed underwater and connected to the USV via an umbilical. This situation is illustrated for example in FIG. 1. By having the ROV underwater, the USV can support and/or supervise the underwater operation.

Step 204 relates to navigating the ROV underwater. The ROV can be operating in an assigned work area. This step brings the ROV to a location where it needs to carry out underwater tasks or the ROV can simply navigate to for example carry out an underwear survey, collecting data for example. This navigation step can also include navigating to a location and then maintaining the position.

Step 206 relates to navigating the USV. The USV can be navigated in response to the navigation of the ROV (step 204) to follow the ROV. In normal operation conditions, the primary purpose of the USV navigation is supporting the ROV and maintaining the functionality of the umbilical. The USV-ROV assembly for example can be in a follow-ROV mode in which the USV is actively following the ROV. The follow-ROV mode is illustrated in FIG. 3A. FIG. 3A shows a USV 300, similar to the surface vessel 100 of FIG. 1, having sensor(s) 310 and a communication means 320. ROV 330 is connected to USV 300 via an umbilical 340. In FIG. 3A, the USV-ROV assembly (300, 330, 340) is in a follow-ROV mode. The ROV 330 is leading, navigating in a navigational direction 350. The USV 300 is actively following the ROV 330 in the same direction 360 at the sea surface.

Step 208 relates to acquiring a navigation risk level. The navigation risk level can be calculated by a risk management unit present on the surface vessel or USV.

When navigating the USV-ROV assembly, various navigation factors can be detected by the sensor(s) 310. For example, other objects at sea such as other vessels, buoys, floating debris, marine life, and submerged obstacles can be detected. Also, weather conditions such as wind speed/direction, visibility, temperature, storms, or severe weather events, or water conditions such as wave height, water currents, tides, sea state (e.g., calm, rough), water temperature of other relevant factors can be detected. The navigation factors can also relate to the operation of the USV-ROV assembly such as malfunction in sensors, errors in control unit, battery levels, power supply status, tension in the umbilical connecting the USV and the ROV. The navigation factors can also relate to external data such as externally provided traffic information, alerts from maritime traffic services/from other vessels, signals from a control center, etc. FIG. 3B shows a situation where another vessel 370 is on the way of the USV-ROV assembly 300, 330 ,340 which is navigating in the follow-ROV mode in the direction of 350, 360. The other vessel 370 can be detected by the USV 310 or the ROV 330.

Any of the navigation factors, such as the detected vessel 370, can be taken into account in acquiring a navigation risk level. The navigation risk level can be a value that corresponds with a risk of collision. However, the navigation risk level can also be correlated with the risk losing control, e.g. as a result of wind. The navigation risk level can be calculated based on the actual surroundings as detected and/or based on calculated future scenarios based on the detected values. E.g. an object moving directly towards the USV can result in a high navigation risk level as the chance of a collision is high.

The navigation risk level can be determined by, for example, a look-up table which can take the navigation factors into account and evaluate the risk level accordingly. Such evaluation/calculation of risk level can also be done using a machine learning algorithm which is pre-trained to calculate navigation risk level using the sensor data acquired from the sensor(s) 310.

The navigation risk level can relate to the risk at the current location of the USV or surface vessel. The navigation risk level can also relate to the risk at several locations in the surroundings. This allows detecting locations in the vicinity that are associated with a lower risk of a collision.

The navigation risk level can be subsequently compared to a predetermined risk value. The predetermined risk value can be a pre-set value based on historical navigation risk levels. The navigation risk level should stay below the predetermined risk value in normal operations. If the navigation risk evaluated from the detected vessel 370 is higher than the predetermined risk value, the USV-ROV assembly changes the course for example to avoid collision with the detected vessel 370 for safe navigation.

Step 210 relates to upon determining the current navigation risk level being above a predetermined risk value, instructing the USV-ROV assembly to switch to a follow-sub mode in which the ROV is autonomously following the USV. FIG. 3C shows an example of the follow-sub mode situation. The USV 300 has changed the navigation direction to 360', navigating away from the detected object 370. The ROV 330, in the follow-USV mode, also has changed the navigation direction accordingly to 350', which following the same direction 360' of the USV. As shown in FIG. 3C, the USV-ROV assembly is safely navigating away from the detected vessel 370 while maintaining the functionality of the umbilical 340 thanks to the synchronized motion of the USV 300 and the ROV 330 in the same direction 360', 350'. The sensor(s) 310 can periodically observe the surroundings for updating the current risk level. When the risk level becomes lower than the threshold value, the USV-ROV assembly can resume the ROV-follow mode to continue carrying out the underwater operations.

In the follow-USV mode of the ROV, the ROV can still acquire data regarding the surroundings and provide overriding instructions received from the USV, e.g. to avoid collision of the ROV underwater.

In embodiments, the control unit of the USV-ROV assembly is configured to calculate a navigation trajectory towards a location with a lower navigation risk level. Upon determining that the navigation risk level is too high, the USV and ROV are controlled to drive in accordance with the generated navigation trajectory.

As a result of the evasive action shown in FIG. 3C, the risk of a collision will reduce and the navigation risk level for the surface vessel/USV will reduce at the locations to which it navigates. The surface vessel can continue to navigate to reduce the navigation risk value for the surface vessel to a safe margin under the predetermined risk value, e.g. 10%. During the navigation, the surface vessel/USV repeatedly updates data relating to the surroundings and can update the navigation risk level accordingly.

In embodiments, a second predetermined risk value can be sent to the surface vessel/USV. The second predetermined risk value can replace the original predetermined risk value. This will allow updating the safety margin for an operation by remote intervention.

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. A method for controlling navigation of an assembly of an uncrewed surface vessel (USV) and a remotely operated vehicle (ROV) deployed underwater connected to the USV via an umbilical, comprising the steps of:
- navigating the ROV underwater;
- navigating the USV;
- providing a predetermined risk value and acquiring a navigation risk level;
- upon determining that the navigation risk level is above the predetermined risk value, instructing the USV-ROV assembly to switch to a follow-USV mode in which the ROV is autonomously following the USV.

2. The method of claim 1, the method further comprises steps of:
- generating a navigation trajectory for the USV dependent on the navigation risk level;
- navigating the USV along the navigation trajectory during the follow-USV mode.

3. The method of claim 2, wherein the generating of the navigation trajectory for the USV-ROV assembly in the follow-USV mode is generated dependent on a current position of the ROV and/or a desired working area for the ROV.

4. The method of any of the preceding claims, wherein, upon determining that the navigation risk level is below the predetermined risk value, the method further comprises at least one or a combination of:
- deactivating the follow-USV mode,
- instructing the ROV to switch to autonomous navigation, and/or
- instructing the USV to switch to a follow-ROV mode, in which the USV is autonomously following the ROV.

5. The method of any of the preceding claims, wherein the acquiring of the navigation risk level comprises:
- acquiring a set of sensor data indicative of surface conditions surrounding the USV; and
- determining the navigation risk level of the USV dependent on the acquired set of sensor data.

6. The method of claim 5, wherein the method further comprises steps of:
- periodically updating the set of sensor data;
- periodically updating the navigation risk level.

7. The method of any of claims 5-6, wherein the acquiring of the sensor data comprises:
- acquiring from at least one of or any combination of:
∘ a radar sensor;
∘ a lidar sensor;
∘ a sonar sensor;
∘ an optical sensor; and
∘ a weather sensor,
and/or
- acquiring the set of sensor data indicative of any of or any combination of:
∘ wave height;
∘ wind speed;
∘ wind direction;
∘ water currents;
∘ visibility;
∘ temperature;
∘ nearby objects, and/or
∘ properties, such as size, velocity, class, of nearby objects.

8. The method of any of the preceding claims, wherein the method further comprises a step of sending an alert to a land-based station or a human operator upon determining that the navigation risk level is above the predetermined risk value.

9. The method of any of preceding claims, wherein the method further comprises steps of:
- receiving a second risk value via a wireless communication channel,
- updating the predetermined risk value based on the received second risk value, and
- upon determining that the navigation risk level is above a second predetermined risk value which is higher than the predetermined risk value, generating a third navigation trajectory for the USV to reduce the risk level.

10. The method of any preceding claims, wherein the acquiring of the navigation risk level is further based on a measured tension in an umbilical connecting the USV and the ROV.

11. An assembly of an uncrewed surface vessel (USV) and a remotely operated vehicle (ROV) connected to the USV via an umbilical, wherein:
- the ROV has at least one ROV drive,
- the USV has at least one USV drive,
- the USV has at least one sensor configured to acquire a set of sensor data;
- the USV has a risk management unit configured to acquire a navigation risk level based on the set of sensor data, and
- the assembly has at least one control unit configured to:
∘ operate the ROV drive to navigate the ROV underwater, comprising at least a follow-USV mode;
∘ operate the USV drive to navigate the USV in the sea; and
∘ upon determining that the navigation risk level is above a predetermined risk value, operate the ROV to navigate in the follow-USV mode.

12. The assembly according to claim 11, wherein the at least one control unit is further configured to:
- generate a navigation trajectory for the USV dependent on the navigation risk level;
- operate the USV drive to navigate the USV along the navigation trajectory; and/or
- drive the ROV in the follow-USV mode to follow the USV along the navigation trajectory,
and/or
- to switch on the follow-the-ROV mode and switch off the follow-the-USV mode upon determining that the navigation risk level is no longer above the predetermined risk value.

13. The assembly according to any of claims 13-15, wherein the at least one sensor is further configured to periodically acquire sensor data and update the set of sensor data, and wherein the risk management unit is further configured to periodically update the risk factor based on the updated set of sensor data.

14. A surface vessel to be connected a remotely operated vehicle (ROV) connected to the surface vessel via an umbilical, wherein the surface vessel further comprises:
- at least one surface vessel drive,
- at least one sensor configured to acquire a set of sensor data that are indicative of surface conditions surrounding the surface vessel;
- a risk management unit arranged to acquire a navigation risk level based on the set of sensor data, and
- at least one control unit configured to:
∘ operate the surface vessel drive to navigate the surface vessel in the sea, comprising at least a follow-the-ROV mode
∘ upon determining that the navigation risk level is above a predetermined risk value, switch off the follow-the-ROV mode.

15. The uncrewed surface vessel of claim 14, wherein the control unit is configured to:
- communicate via the umbilical with the ROV, and/or
- to instruct the ROV to switch to a follow-the-USV mode upon determining that the navigation risk level is above the predetermined risk value, and/or
- generate a navigation trajectory for the surface vessel dependent on the navigation risk level and to navigate the surface vessel along the navigation trajectory upon determining that the navigation risk level is above the predetermined risk value.
